Europäisches Patentamt

(19) European Patent Office

Office européen des brevets

(11) Numéro de publication: **0 246 944**
**B1**

(12) **FASCICULE DE BREVET EUROPEEN**

(45) Date de publication du fascicule du brevet:
26.09.90

(21) Numéro de dépôt: **87401005.1**

(22) Date de dépôt: **30.04.87**

(51) Int. Cl.⁵: **G05D 16/06,** F17C 13/04

(54) **Détendeur de gaz et son procédé de fabrication.**

(30) Priorité: **22.05.86 FR 8607294**

(43) Date de publication de la demande:
**25.11.87 Bulletin 87/48**

(45) Mention de la délivrance du brevet:
**26.09.90 Bulletin 90/39**

(84) Etats contractants désignés:
**DE ES GB IT**

(56) Documents cités:
**EP-A- 0 150 143**
**FR-A- 2 579 337**
**US-A- 3 900 045**

(73) Titulaire: **BRIFFAULT, Société dite:, Résidence "La
Belle Epoque" 11, Impasse Gaudelet, F-75011 Paris(FR)**

(72) Inventeur: **Huet, Alain, 31, rue Charles Michels,
F-27340 Pont de l'Arche(FR)**
Inventeur: **Mouly, Pierre, Chemin de la Forêt, Flipou,
F-27380 Fleury sur Andelle(FR)**

(74) Mandataire: **Bourgognon, Jean-Marie et al, Cabinet
Flechner 22, Avenue de Friedland, F-75008 Paris(FR)**

ACTORUM AG

# Description

La présente invention est relative aux appareils de régulation utilisant une membrane pour maintenir une pression de sortie sensiblement constante, quels que soient la pression et le débit d'entrée et, plus particulièrement, à des détendeurs de gaz.

Au brevet des Etats-Unis d'Amérique 3 900 045, on décrit un détendeur de gaz comprenant une membrane dont l'une des faces est en contact avec un plateau et dont le pourtour est coincé entre un corps et un couvercle. Le corps et le couvercle ont de préférence une forme générale de révolution par rapport à un axe. La membrane subdivise l'espace délimité par le corps et par le couvercle en deux chambres. L'une des chambres comporte le plateau et, de préférence à distance de l'axe, un ressort le repoussant. L'autre chambre communique, outre avec un raccord de sortie, avec un raccord d'entrée, sur l'embouchure duquel la membrane vient s'appliquer quand le plateau bascule par rapport à un point d'appui prévu entre le ressort et l'embouchure. Le point d'appui et le ressort sont de préférence de part et d'autre de l'axe. La fabrication de ce détendeur s'effectue de la manière suivante : on met la membrane solidaire du plateau sur le corps. On met le ressort sur le plateau. On met le couvercle sur le corps en enfermant le ressort. Tout en maintenant le couvercle à l'encontre de la force du ressort, on effectue un présertissage de manière à pouvoir ensuite amener l'ensemble ainsi préconstitué à un autre poste de travail. On effectue le sertissage définitif.

L'invention vise un détendeur de gaz plus simple à fabriquer que le détendeur antérieur.

Suivant l'invention, le détendeur de gaz, du type mentionné au début du présent mémoire, comprend des moyens pour retenir le plateau au couvercle.

Lors du procédé de fabrication d'un tel détendeur, on forme un sous-ensemble comprenant un plateau de membrane retenu à un couvercle, avec interposition d'un ressort entre le plateau et le couvercle. Ce sous-ensemble n'a pas besoin de subir un présertissage et peut être transporté d'un poste à un autre sans avoir à exercer une pression sur le couvercle. Grâce aux moyens de retenue du plateau au couvercle, ce sous-ensemble ne se défait pas de soi-même. On se dispense ainsi d'une opération de présertissage et de la difficulté de maintenir une pression sur le couvercle pendant les opérations. Le fonctionnement du détendeur est, en outre, impeccable car l'ensemble du plateau et de la membrane retenus d'un seul côté peuvent basculer sans encombre par rapport au point d'appui sans danger de blocage, même si les pièces constitutives du détendeur, n'ont pas été réalisées à des cotes très précises.

Suivant un mode de réalisation préféré, parce que particulièrement simple, les moyend de retenue du plateau au couvercle sont constitués par le fait que le plateau est articulé au couvercle. L'articulation permet ainsi à la fois de réaliser le basculement du plateau et sa retenue. Le plateau peut, par exemple, comporter des pattes formant palier pour un axe monté tournant sur le couvercle. Mais de préférence, l'axe d'articulation et façonné avec le couvercle en venant notamment de moulage, et le plateau est encliqueté sur cet axe, au moyen de formes adaptées telles que des lèvres élastiques. Bien entendu, il est aussi possible de façonner l'axe d'articulation avec le plateau, notamment en le faisant venir de moulage avec celui-ci et d'encliqueter le couvercle sur cet axe au moyen de lèvres élastiques. Lors du basculement du plateau, la membrane qui est en contact avec lui, peut subir des contraintes internes qui sont défavorables à une régulation fine. Pour y remédier, il est bon que le plateau soit articulé au couvercle de manière à avoir, en plus du mouvement de basculement, un autre degré de liberté en déplacement, notamment de manière à pouvoir se déplacer suivant un trajet perpendiculaire à l'axe. Cela permet un ajustement latéral du plateau pour relacher les contraintes qui s'appliquent sur la membrane. On peut, par exemple, prévoir, à cet effet, des paliers oblongs à grand axe s'étendant perpendiculairement à l'axe du détendeur, pour le logement de l'axe d'articulation.

On facilite encore le montage, en prévoyant des moyens de limitation du basculement du plateau dans le sens dû à l'action de la force du ressort, ces moyens étant ménagés dans la chambre où est logé le ressort. On est sûr ainsi que le ressort ne peut pas sortir de la chambre dans laquelle il se trouve en faisant trop basculer le plateau. Cela n'est pas gênant pour la régulation, puisque la plage de basculement de la membrane pour la régulation est relativement petite. Grâce à ces moyens de limitation du basculement du plateau, la mise en position correcte du sous-ensemble, comprenant le couvercle et le plateau sur le corps, est assurée. Les moyens de limitation du basculement du plateau peuvent être constitués par une butée issue du couvercle et se trouvant de l'autre côté du point d'appui que le ressort, cette butée pouvant être également issue du plateau et venir en butée sur le couvercle, ou même être constituée par une conformation telle du couvercle que le débattement du plateau soit limité.

Lorsque la membrane est désolidarisée du plateau, on voit mieux, lors du montage, la disposition des pièces à l'intérieur de la chambre où se trouve le ressort, et il est plus facile de positionner correctement le corps par rapport au couvercle en se dispensant d'organes d'indexation. Cette désolidarisation permet de monter la membrane sans contraintes internes. L'énergie pour la déplacer est moindre. La régulation est plus fine et les performances de l'appareil sont meilleures. Comme la membrane est plus sensible, on peut en diminuer la dimension. Le détendeur peut avoir des dimensions plus petites. Lors du montage, on constitue le sous-ensemble, formé du couvercle et du plateau maintenant le ressort, et, lorsque l'on met ce sous-ensemble sur le corps, on interpose la membrane. On se dispense ainsi, en outre, de l'opération de solidarisation de la membrane au plateau.

Suivant un mode de réalisation de l'invention, un ressort supplémentaire, de moindre raideur que le ressort principal, est monté de manière à appliquer à la partie de la membrane, destinée à venir s'appliquer sur l'embouchure, une force tendant à la maintenir à distance de l'embouchure.

A la figure 1, du brevet des Etats-Unis d'Amérique 3 900 045, il est bien prévu un ressort ayant cet effet. Mais ce ressort sert aussi de ressort principal. Il s'en suit que sont bras de levier, par rapport à l'axe d'articulation, est petit et qu'il agit moins efficacement en tant que ressort principal. Comme il doit être puissant, le montage est très difficile. En prévoyant deux ressorts distincts, suivant l'invention, l'un pour la régulation, l'autre pour empêcher que la membrane ne vienne s'appliquer irréversiblement sur l'embouchure, on remédie à ces inconvénients.

Lorsque les détendeurs, suivant l'invention, sont utilisés en robinet, ils comportent avantageusement une manette ayant sensiblement le même axe de rotation que l'axe du détendeur. L'utilisateur s'attend en effet, à trouver le robinet d'un détendeur en cette position et sait le manoeuvrer immédiatement à la manière d'un robinet classique. Pour conserver cet avantage de manoeuvre dans un détendeur suivant l'invention, il est prévu une patte s'étendant de préférence parallèlement à l'axe, solidaire en basculement du plateau et attaquant celui-ci à l'endroit du point d'appui et un mécanisme pour déplacer l'extrémité libre de la patte suivant un mouvement ayant une composante perpendiculaire à l'axe. On obtient bien ainsi un basculement du plateau, et donc de la membrane avec laquelle il est en contact, par une rotation du mécanisme qui comprend la manette, et cependant la force de rotation à appliquer par l'utilisateur n'est pas exagérément grande, puisque la patte de transmission de la force part du point d'appui et puisqu'ainsi, la composante utile du mouvement de rotation imprimé par la manette provoque au mieux le basculement du plateau et de la membrane associée. Il n'en serait pas ainsi, si la patte attaquait le plateau à distance du point d'appui.

Aux dessins annexés, donnés uniquement à titre d'exemple :

La figure 1 est une vue en coupe d'un détendeur suivant l'invention ;
La figure 2 est une vue suivant la ligne II-II de la figure 1 ; et
Les figures 3 à 6 sont des schémas illustrant des variantes de réalisation.

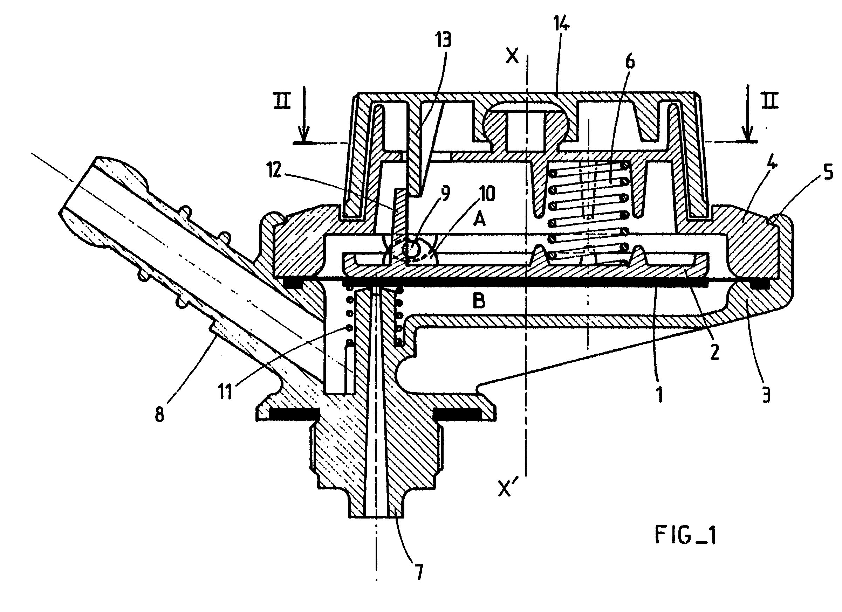

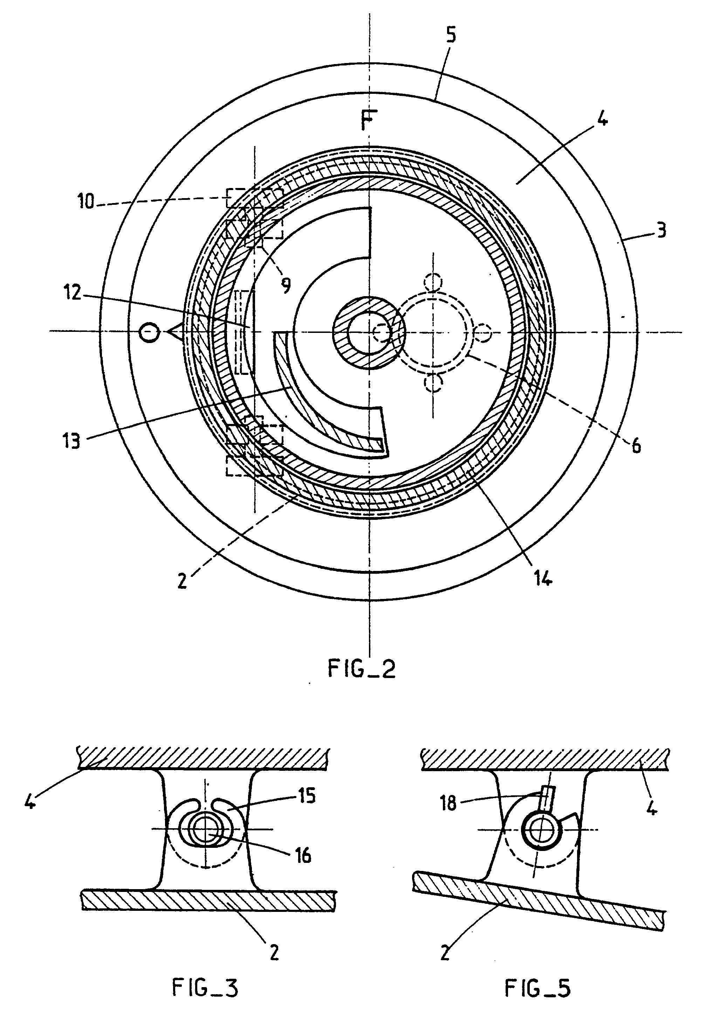

Le détendeur de gaz, représenté aux figures 1 et 2, comprend une membrane 1 dont la face supérieure est en contact avec un plateau 2 sans en être solidaire et dont le pourtour est coincé entre un corps 3 et un couvercle 4 par un sertissage 5. Le corps 3 et le couvercle 4 sont de forme générale de révolution par rapport à l'axe X, X'. La membrane 1 subdivise l'espace enfermé par le corps 3 et par le couvercle 4 en deux chambres A, B. La chambre A supérieure comporte le plateau 2 et, à distance de l'axe X, X', un ressort 6 dont l'une des extrémités s'appuie sur le sommet du couvercle 4 et dont l'autre extrémité repousse le plateau 2. L'autre chambre B inférieure communique avec un raccord d'entrée 7 et avec un raccord de sortie 8, le plateau 2 est articulé par un axe 9 d'articulation sur deux paliers 10 venus de moulage avec le couvercle 4. L'axe 9 représente un point d'appui prévu entre le ressort 6 et l'embouchure du raccord d'entrée 7 dans la chambre B, autour duquel le plateau 2 peut basculer en faisant par la même basculer la membrane 1 qui peut venir s'appliquer sur l'embouchure du raccord d'entrée 7 ou s'en éloigner. Un ressort 11 de moindre raideur que le ressort 6 est enfilé sur l'embouchure du raccord d'entrée 7 et empêche la membrane 1 de s'appliquer irréversiblement sur l'embouchure. Du plateau 2 part, à l'endroit du point d'appui, une patte 12 qui s'étend parallèlement à l'axe X, X'. L'extrémité libre de la patte 12 est repoussée par un excentrique 13 venu de moulage avec une manette 14 pouvant être tournée manuellement d'un quart de tour par rapport à l'axe X, X'.

La figure 3 illustre un mode de réalisation de l'articulation du plateau au couvercle par un pallier 15 oblong permettant à l'axe 16 d'articulation du plateau de se débattre latéralement.

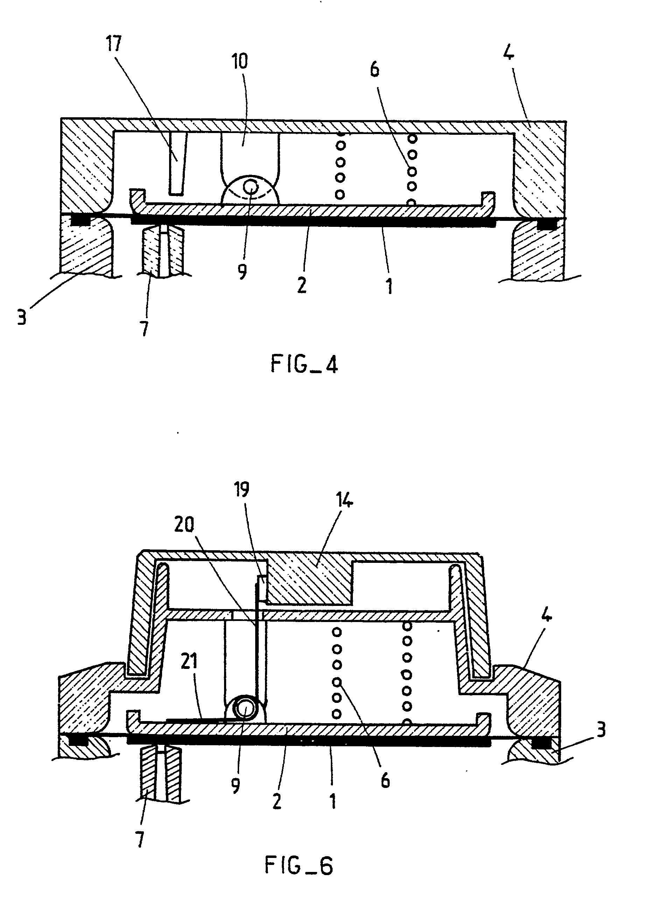

A la figure 4, une butée 17 venue de moulage avec le couvercle 4 limite le basculement du plateau 2 dans le sens des aiguilles d'une montre. La butée 17 est de l'autre côté du ressort 6 par rapport à l'axe 9 d'articulation du plateau 2.

A la figure 5, la butée 18 issue du couvercle, limite également la rotation angulaire du plateau 2.

La figure 6 illustre une variante de réalisation du robinet détendeur. La manette 14 du robinet attaque par une came 19, une branche 20 verticale d'un ressort dont une spire centrale est enroulée sur l'axe de rotation 9 permettant le basculement du plateau 2 par rapport au couvercle 4, l'autre branche 21 du ressort, sensiblement horizontale, venant appliquer une force sur le plateau 2. Cette force tend à faire basculer le plateau dans le sens trigonométrique et donc à appliquer la membrane 1 sur l'embouchure du raccord d'entrée 7.

Le procédé de fabrication du détendeur, suivant la figure 4, consiste à créer d'abord le sous-ensemble constitué du plateau 2, du couvercle 4 et du ressort 6 puis, sans présertissage dans un poste particulier, à le monter sur le corps 3 et à sertir. Le sous-ensemble constitue une unité stable sur laquelle il n'est pas besoin d'appliquer des forces pour lui conserver sa stabilité.

**Revendications**

1. Détendeur de gaz, comprenant une membrane (1) dont l'une des faces est en contact avec un plateau (2) et dont le pourtour est coincé entre un corps (3) et un couvercle (4), de préférence de forme générale de révolution par rapport à un axe (X, X'), en subdivisant l'espace délimité par le corps (3) et par le couvercle (4) en deux chambres (A,B), dont l'une comporte le plateau (2) et, de préférence à distance de l'axe (X, X'), un ressort (6) le repoussant, et dont l'autre communique, outre avec un raccord de sortie (8), avec un raccord d'entrée (7) sur l'embouchure duquel la membrane (1) vient s'appliquer quand le plateau (2) bascule par rapport à un point d'appui prévu entre le ressort (6) et l'embouchure, le point d'appui et le ressort (6) étant de préférence de part et d'autre de l'axe (X, X'), caractérisé par des moyens (9, 10) pour retenir le plateau (2) au couvercle (4).

2. Détendeur de gaz suivant la revendication 1, caractérisé en ce que les moyens de retenue du plateau au couvercle sont constitués par le fait que le plateau (2) est articulé au couvercle (4).

3. Détendeur de gaz suivant la revendication 2, caractérisé en ce que le plateau (2) est articulé au couvercle (4) de manière à avoir, en plus du mouvement de basculement, un autre degré de liberté en déplacement, notamment à pouvoir se déplacer suivant un trajet perpendiculaire à l'axe (X, X').

4. Détendeur de gaz suivant la revendication 1, 2 ou 3, caractérisé par une liaison par encliquetage du plateau (2) et du couvercle (4).

5. Détendeur de gaz suivant l'une des revendications 1 à 4, caractérisé en ce qu'il comprend des moyens de limitation (17) du basculement du plateau, dans le sens dû à l'action de la force du ressort (6), ménagés dans la chambre (A) où est logé le ressort (6).

6. Détendeur de gaz suivant l'une des revendications précédentes, caractérisé en ce que la membrane (1) est désolidarisée du plateau (2).

7. Détendeur de gaz suivant l'une des revendications précédentes, caractérisé par un ressort supplémentaire (11), de moindre raideur que le ressort principal, monté de manière à appliquer à la partie de la membrane (1) destinée à venir s'appliquer sur l'embouchure une force tendant à la maintenir à distance de l'embouchure.

8. Détendeur de gaz suivant l'une des revendications précédentes, caractérisé par une patte (12), s'étendant de préférence parallèlement à l'axe (X, X') solidaire en basculement du plateau (2) et attaquant celui-ci à l'endroit du point d'appui, et par un mécanisme pour déplacer l'extrémité libre de la patte (12) suivant un mouvement ayant une composante perpendiculaire à l'axe (X, X').

9. Procédé de fabrication d'un détendeur de gaz, caractérisé en ce qu'il consiste à former un sous-ensemble comprenant un plateau de membrane retenu à un couvercle, avec interposition d'un ressort entre le plateau et le couvercle, puis à monter ce sous-ensemble sur le corps avec coincement d'une membrane entre le couvercle et le corps, la membrane étant de préférence désolidarisée du plateau.

## Patentansprüche

1. Druck-Reduzierventil für Gase, mit einer Membran (1), deren eine Stirnfläche mit einem Teller (2) in Berührung steht und deren Rand zwischen einem Gehäuse (3) und einem Deckel (4) eingespannt ist, welche Teile vorzugsweise bezüglich einer Achse (X, X') rotationssymmetrische Form haben, wobei die Membran (1) den durch das Gehäuse (3) und den Deckel (4) begrenzten Raum in zwei Kammern (A, B) unterteilt, von denen die eine Kammer den Teller (2) und eine den Teller (2) vorspannende Feder (6) aufnimmt, die vorzugsweise unter Abstand von der Symmetrieachse (X, X') angeordnet ist, und von denen die zweite mit einem Auslaßanschluß (8) und mit einem Einlaßanschluß (7) in Verbindung steht, gegen dessen Mündungsöffnung die Membran (1) angelegt wird, wenn der Teller (2) bezüglich eines Lagerpunktes verkippt wird, der zwischen der Feder (6) und der Mündungsöffnung liegt, wobei der Lagerpunkt und die Feder (6) vorzugsweise auf gegenüberliegenden Seiten der Symmetrieachse (X, X') angeordnet sind, dadurch gekennzeichnet, daß Mittel (9, 10) vorgesehen sind, um den Teller (2) am Deckel (4) zu halten.

2. Reduzierventil für Gase gemäß Anspruch 1, dadurch gekennzeichnet, daß die Mittel zum Halten des Tellers (2) am Deckel (4) dadurch gebildet sind, daß der Teller (2) am Deckel (4) angelenkt ist.

3. Reduzierventil für Gase nach Anspruch 2, dadurch gekennzeichnet, daß der Teller (2) so am Deckel (4) angelenkt ist, daß er neben der Kippbewegung einen zusätzlichen Translations-Freiheitsgrad hat, sich insbesondere längs einer Bahn verlagern kann, die senkrecht auf der Symmetrieachse (X, X') steht.

4. Reduzierventil für Gase nach Anspruch 1, 2 oder 3, gekennzeichnet durch eine Schnappverbindung zwischen Teller (2) und Deckel (4).

5. Reduzierventil für Gase nach einem der Ansprüche 1–4, dadurch gekennzeichnet, daß Mittel (17) zum Begrenzen des Kippweges des Tellers (2) in der Richtung vorgesehen sind, in welcher der Teller unter der Kraft der Feder (6) bewegt wird, wobei diese Wegbegrenzungsmittel in derjenigen Kammer (A) untergebracht sind, welche auch die Feder (6) aufnimmt.

6. Reduzierventil für Gase nach einem der vorhergehenden Ansprüche, dadurch gekennzeichnet, daß die Membran (1) ein vom Teller (2) getrenntes Bauteil ist.

7. Reduzierventil für Gase nach einem der vorhergehenden Ansprüche, gekennzeichnet durch eine Zusatzfeder (11), die geringere Steife aufweist als die Hauptfeder (6) und die so angeordnet ist, daß sie auf denjenigen Abschnitt der Membran (1), der zur Anlage an der Mündungsöffnung des Einlaßanschlusses (7) vorgesehen ist, eine Kraft ausübt, durch welche die Membran unter Abstand von der Mündungsöffnung gehalten wird.

8. Reduzierventil für Gase nach einem der vorhergehenden Ansprüche, gekennzeichnet durch einen Anschlag (12), der sich vorzugsweise parallel zur Symmetrieachse (X, X') erstreckt und zusammen mit dem Teller (2) verkippt wird und an diesem an der Stelle des Lagerpunktes angreift, und durch eine Einrichtung, durch welche das freie Ende des Anschlages (12) längs einer Bahn bewegbar ist, welche eine senkrecht auf der Symmetrieachse (X, X') stehende Bahnkomponente hat.

9. Verfahren zum Herstellen eines Reduzierventiles für Gase, dadurch gekennzeichnet, daß eine Untereinheit zusammengestellt wird, welche einen Membranteller umfaßt, der von einem Deckel gehalten ist, wobei zwischen dem Teller und den Deckel eine Feder eingefügt ist, daß dann diese Untereinheit auf dem Gehäuse angebracht wird und die Membran zwischen einen Deckel und das Gehäuse eingespannt wird, wobei die Membran vorzugsweise ein vom Membranteller getrenntes Bauteil darstellt.

## Claims

1. Gas-pressure reducing valve, comprising a membrane (1), one of the sides of which is in contact with a plate (2), and the circumference of which is trapped between a body (3) and a lid (4), preferably having the general form of a body of revolution in relation to an axis (X, X') this membrane subdividing the space defined by the body (3) and the lid (4) into two chambers (A, B), one of which comprises the plate (2) and, preferably at a distance from the axis (X, X'), a spring (6) forcing the said plate back, and the other of which communicates both with the outlet connection piece (8) and with an inlet connection piece (7), on the orifice of which latter piece the membrane (1) comes to bear when the plate (2) rocks in relation to a supporting point provided between the spring (6) and the orifice, the supporting point and the spring (6) being preferably on either side of the axis (X, X'), characterised by means (9, 10) for retaining the plate (2) against the lid (4).

2. Gas-pressure reducing valve according to claim 1, characterised in that the means for retaining the plate against the lid are formed due to the plate (2) being pivotably attached to the lid (4).

3. Gas-pressure reducing valve according to claim 2, characterised in that the plate (2) is pivotably attached to the lid (4) so that the said plate has, as well as the rocking movement, another degree of freedom of movement, in particular the ability to move along a path perpendicular to the axis (X, X').

4. Gas-pressure reducing valve according to claim 1, 2 or 3, characterised by a catch connection of the plate (2) and the lid (4).

5. Gas-pressure reducing valve according to one of claims 1 to 4, characterised in that it comprises means (17) for limiting the rocking of the plate, in the direction due to the action of the force of the spring (6), which means are arranged in the chamber (A) where the spring (6) is housed.

6. Gas-pressure reducing valve according to one of the preceding claims, characterised in that the membrane (1) is disunited from the plate (2).

7. Gas-pressure reducing valve according to one of the preceding claims, characterised by an additonal spring (11) which is less stiff than the main spring and is mounted so that a force is applied to the part of the membrane (1) which is to come to bear upon the orifice, which force tends to maintain this part of the membrane at a distance from the orifice.

8. Gas-pressure reducing valve according to one of the preceding claims, characterised by a tab (12) which extends preferably parallel to the axis (X, X') integral with the rocking of the plate (2), and which moves the said plate at the location of the supporting point, and by a device for moving the free end of the tab (12) according to a movement having a componenent which is perpendicular to the axis (X, X').

9. Method for manufacturing a gas-pressure reducing valve, characterised in that it consists in forming a subassembly comprising a membrane plate retained against a lid, with the insertion of a spring between the plate and the lid, and then in mounting this subassembly on the body, trapping a membrane between the cover and the body, the membrane being preferably disunited from the plate.

FIG_1

FIG_2

FIG_3

FIG_5

EP 0 246 944 B1

FIG_4

FIG_6